(19) Europäisches Patentamt
European Patent Office
Office européen des brevets

(11) EP 2 853 873 A1

(12) EUROPÄISCHE PATENTANMELDUNG

(43) Veröffentlichungstag:
01.04.2015 Patentblatt 2015/14

(51) Int Cl.:
G01K 13/08 (2006.01)     G01K 7/16 (2006.01)
G01D 5/20 (2006.01)

(21) Anmeldenummer: 13186601.4

(22) Anmeldetag: 30.09.2013

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(71) Anmelder: Siemens Aktiengesellschaft
80333 München (DE)

(72) Erfinder:
• Schwesig, Günter
  91054 Erlangen (DE)
• Schierling, Hubert
  91052 Erlangen (DE)

(54) **Vorrichtung und Verfahren zur Erfassung einer Temperatur eines Rotors eines Elektromotors**

(57) Die Erfindung ist eine Vorrichtung und ein Verfahren zur Erfassung einer Temperatur eines Rotors (14) eines Elektromotors (50), wobei ein dem Elektromotor (50) zugeordneter Resolver (10) als Mittel zur Erfassung der Temperatur des Rotors (14) fungiert sowie eine Verwendung eines zur Erfassung einer Rotationslage eines Rotors (14) eines Elektromotors (50) vorgesehenen Resolvers (10) als Mittel zur Ermittlung einer Temperatur eines Rotors (14) des Elektromotors (50).

FIG 1

$B2 * sin(\alpha) * sin(\varpi * t - \varphi 2)$

$B2 * cos(\alpha) * sin(\varpi * t - \varphi 2)$

$B2 * sin(\alpha)$
$B2 * cos(\alpha)$

$B1 * sin(\varpi * t - \varphi 1)$

$A * sin(\varpi * t)$

EP 2 853 873 A1

**Beschreibung**

Die Erfindung betrifft eine Vorrichtung und ein Verfahren zur Erfassung einer Temperatur eines Rotors eines Elektromotors.

Bei Werkzeugmaschinen (WZM), Industrieantrieben und Elektrofahrzeugen werden vorzugsweise Elektromotoren in Form von permanenterregten Synchron- und Asynchronmaschinen (PSM, ASM) eingesetzt. Für einen Betrieb solcher Elektromotoren in einem optimalen Arbeitspunkt (u.a. Wirkungsgrad) sowie im Hinblick auf eine Regelungsdynamik, eine Drehmomentbestimmung etc. ist es erforderlich, den Betrag und die Höhe des magnetischen Flusses in dem jeweiligen Elektromotor zu kennen.

Wenn aus Spannung, Strom und Rotorlagewinkel/Drehzahl das Drehmoment des Elektromotors bestimmt werden soll, so ist dieses nur hinreichend genau bestimmbar, wenn der magnetische Fluss entsprechend genau bekannt ist.

Bei einem Elektromotor in Form einer permanenterregten Synchronmaschine wird der magnetische Fluss durch die Permanentmagnete bestimmt und ist bis auf die Exemplarstreuung sehr gut bekannt. Allerdings ändert sich die Magnetfeldstärke der Permanentmagneten mit der Temperatur, so dass der im Betrieb resultierende magnetische Fluss stark temperaturabhängig ist. Eine temperaturabhängige Korrektur ist möglich, wenn die Temperatur des Rotors (Läufer) bekannt ist. Außerdem kann ein Messwert für eine Temperatur des Rotors zur Notabschaltung des Elektromotors verwendet werden, um zu vermeiden, dass sich die Permanentmagnete durch Überhitzung entmagnetisieren.

Bei der Asynchronmaschine wird der magnetische Fluss über den Ständerstrom eingeprägt. Der ohmsche Widerstand des Rotors ist unter anderem ein Parameter für die feldorientierte Regelung. Der ohmsche Widerstand ist allerdings stark temperaturabhängig. Bei einem falsch eingestellten Wert für den ohmschen Widerstand des Rotors entsteht im Rahmen der feldorientierten Regelung eine Fehlorientierung. Dies führt dazu, dass der vermeintlich eingestellte Fluss nicht mit dem tatsächlichen magnetischen Fluss übereinstimmt. Im Weiteren führt dies auch dazu, dass die Asynchronmaschine nicht im optimalen Arbeitspunkt betrieben wird. Darüber hinaus entsteht durch die Fehlorientierung als Regelungsstrecke ein System höherer Ordnung, welches regelungstechnisch zu Schwingungen neigt.

Auch der Ständerwiderstand des jeweiligen Elektromotors ist temperaturabhängig und bestimmt je nach Maschinentyp einzelne Systemeigenschaften. Die Ständertemperatur ist jedoch in der Regel bekannt, weil für den Elektromotor ein Schutz gegen Überhitzung erforderlich ist. Dazu ist in die Ständerwicklung ein temperaturabhängiger Widerstand, zum Beispiel in Form eines oder mehrerer sogenannter Heißleiter (NTC) oder Kaltleiter (PTC), eingebracht. Über eine entsprechende Auswerteelektronik wird die Ständertemperatur ermittelt und der angenommene Ständerwiderstand wird entsprechend korrigiert.

Zur Erfassung einer Temperatur des Rotors eines Elektromotors kommen grundsätzlich mehrere Möglichkeiten in Betracht, nämlich zum Beispiel die Verwendung eines Temperatursensors am Rotor und die Übertragung entsprechender Signale mittels Schleifringen oder dergleichen. Die dafür erforderlichen zusätzlichen Kontaktstellen sind allerdings unerwünscht. Als Alternative kommen thermische Modelle in Betracht. Diese sind sehr komplex und die Verwirbelung im Luftspalt ist drehzahlabhängig. Darüber hinaus sind die Einflüsse von an den Motor angekoppelten Maschinen nicht bekannt und eine etwaige Wasserkühlung im Ständer erhöht die Komplexität solcher thermischer Modelle nochmals beträchtlich.

Andere Ansätze, wie etwa eine Messung mittels eines Thermopile-Sensors, sind nicht robust genug und empfindlich gegenüber Verschmutzung. Eine Aufschaltung von Störgrößen, zum Beispiel das Aufschalten von Strom als Störgröße in Richtung der Flussachse der Asynchronmaschine und eine Beobachtung der Drehzahl, ist alles andere als trivial, denn bei ordnungsgemäßer Feldorientierung darf dabei kein Drehmoment entstehen und es darf sich keine Auswirkung auf die Drehzahl ergeben. Sogenannte EMK-Modelle sind unabhängig vom Widerstand des Rotors und funktionieren nur im oberen Drehzahlbereich des Elektromotors.

Eine Aufgabe der vorliegenden Erfindung besteht entsprechend darin, eine Vorrichtung und ein Verfahren anzugeben, mit dem eine Temperatur eines Rotors eines Elektromotors relativ exakt erfasst werden kann.

Diese Aufgabe wird erfindungsgemäß gelöst mittels einer Vorrichtung mit den Merkmalen des Anspruchs 1. Dabei ist vorgesehen, dass ein dem Elektromotor zugeordneter Resolver als Mittel zur Erfassung der Temperatur des Rotors fungiert.

Der Vorteil der Erfindung besteht darin, dass ein Resolver üblicherweise Bestandteil eines Elektromotors ist, denn mittels eines Resolvers lässt sich bekanntlich eine Rotationslage des Rotors des Elektromotors und damit der Rotorlagewinkel und die Drehzahl des Elektromotors erfassen. Zur Erfassung der Temperatur des Rotors mittels des Resolvers werden also nur bereits vom Elektromotor ohnehin umfasste Funktionseinheiten verwendet. Die Erfassung der Temperatur des Rotors ist damit ohne besonderen zusätzlichen Aufwand auf Seiten des Elektromotors möglich, speziell werden keine zusätzlichen Anschlusspunkte benötigt, denn die Temperatur des Rotors lässt sich bei Verwendung des Resolvers als Mittel zur Erfassung der Temperatur des Rotors aus einzelnen Ein- und/oder Ausgangssignalen des Resolvers ermitteln.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer ersten Ausführungsform der Vorrichtung umfasst der Resolver eine erste ortsfeste Erregerwicklung, eine zweite, mit dem Rotor bewegliche Erregerwicklung, eine ebenfalls mit dem Rotor bewegliche Rotorwicklung und zumindest eine ortsfeste Ständerwicklung. Die zweite Erregerwicklung und die Rotorwicklung im Rotor sind über eine Signalbeeinflussungseinheit gekoppelt. Mittels der Signalbeeinflussungseinheit ist eine temperaturabhängige Weiterleitung einer in die zweite Erregerwicklung induzierten Spannung zur Rotorwicklung bewirkbar. Eine in die oder jede Ständerwicklung aufgrund der temperaturabhängig beeinflussten Spannung der Rotorwicklung induzierte Spannung ist dann als Maß für eine Temperatur des Rotors auswertbar.

Bei einer speziellen Ausführungsform dieser Variante der Vorrichtung ist an die Signalbeeinflussungseinheit ein im Rotor befindlicher Temperatursensor angeschlossen, wobei aufgrund eines mittels des Temperatursensors aufgenommenen Maßes für die Temperatur des Rotors mittels der Signalbeeinflussungseinheit eine charakteristische Größe einer zur Rotorwicklung gelangenden Erregerspannung beeinflussbar ist. Der Temperatursensor und die Signalbeeinflussungseinheit werden dabei mit der von der ständerseitigen, ersten Erregerwicklung in die rotorseitige, zweite Erregerwicklung eingespeisten elektrischen Energie versorgt. Der Messwert des Temperatursensors wird mittelbar über die durch die Signalbeeinflussungseinheit beeinflusste charakteristische Größe der zur Rotorwicklung gelangenden Erregerspannung ausgegeben. Der Temperatursensor kann also ohne zusätzliche Anschlusspunkte betrieben werden und ein vom Temperatursensor gelieferter Messwert kann ohne zusätzliche Anschlusspunkte ausgewertet werden.

Als charakteristische Größe, die die Signalbeeinflussungseinheit aufgrund des Temperatursensors beeinflusst, kommt zum Beispiel eine Amplitude oder ein Phasenwinkel der zur Rotorwicklung gelangenden Erregerspannung in Betracht. Speziell die Amplitude kann besonders leicht beeinflusst werden, indem zum Beispiel die Amplitude aufgrund des Spannungsabfalls über dem Temperatursensor verringert wird. Die geänderte Amplitude oder der geänderte Phasenwinkel lassen sich leicht als Maß für die Temperatur des Rotors auswerten.

Bei einem Verfahren zum Betrieb einer Vorrichtung gemäß der oben genannten ersten Ausführungsform erfolgt mittels der Signalbeeinflussungseinheit eine temperaturabhängige Weiterleitung einer in die zweite Erregerwicklung induzierten Spannung zur Rotorwicklung. Eine in die oder jede Ständerwicklung aufgrund der temperaturabhängig beeinflussten Spannung der Rotorwicklung induzierte Spannung wird schließlich ständerseitig als Maß für eine Temperatur des Rotors ausgewertet.

Bei einer zweiten Ausführungsform der Vorrichtung ist der Resolver als Reluktanzresolver ausgeführt und umfasst im Ständer zumindest eine Ständerwicklung und eine über der oder jeder Ständerwicklung aufgebrachte Erregerwicklung sowie im Rotor eine geblechte Stahlscheibe. In die oder jede Erregerwicklung ist eine um einen Gleichanteil erhöhte Erregerspannung einspeisbar. Aufgrund der Erregerspannung resultiert ein Erregerstrom und aufgrund des Gleichanteils in der Erregerspannung ist ein resultierender Gleichanteil im Erregerstrom messbar. Aus dem Gleichanteil der Erregerspannung und dem Gleichanteil des Erregerstroms ist dann als Maß für eine Temperatur des Rotors ein ohmscher Widerstand der oder jeder Erregerwicklung ermittelbar.

Bei einem Verfahren zum Betrieb einer Vorrichtung gemäß dieser zweiten Ausführungsform wird in die oder jede Erregerwicklung eine um einen Gleichanteil erhöhte Erregerspannung eingespeist. Ein aufgrund des Gleichanteils in der Erregerspannung resultierender Gleichanteil eines Erregerstroms wird gemessen und aus dem Gleichanteil der Erregerspannung und dem Gleichanteil des Erregerstroms wird als Maß für eine Temperatur des Rotors ein ohmscher Widerstand der oder jeder Erregerwicklung ermittelt.

Die oben genannte Aufgabe wird auch mit einer Auswertungseinheit und einem vom Elektromotor umfassten Resolver gelöst, wobei die Auswertungseinheit nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Auswertungseinheit für einen Elektromotor oder ein Elektromotor mit einer solchen Auswertungseinheit, in deren Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen:

FIG 1 einen Resolver für einen Elektromotor mit den davon umfassten Wicklungen und einzelnen sich im Betrieb ergebenden Signalen,

FIG 2 eine in Bezug auf den Energiefluss lineare Darstellung des Resolvers aus FIG 1,

FIG 3 einen Resolver für einen Elektromotor in einer Ausführungsform als Reluktanzresolver und

FIG 4 eine schematisch vereinfachte Prinzipdarstellung eines Elektromotors mit einem davon als Mittel zur Erfassung der Temperatur des Rotors des Elektromotors umfassten Resolver nach FIG 1 oder FIG 3.

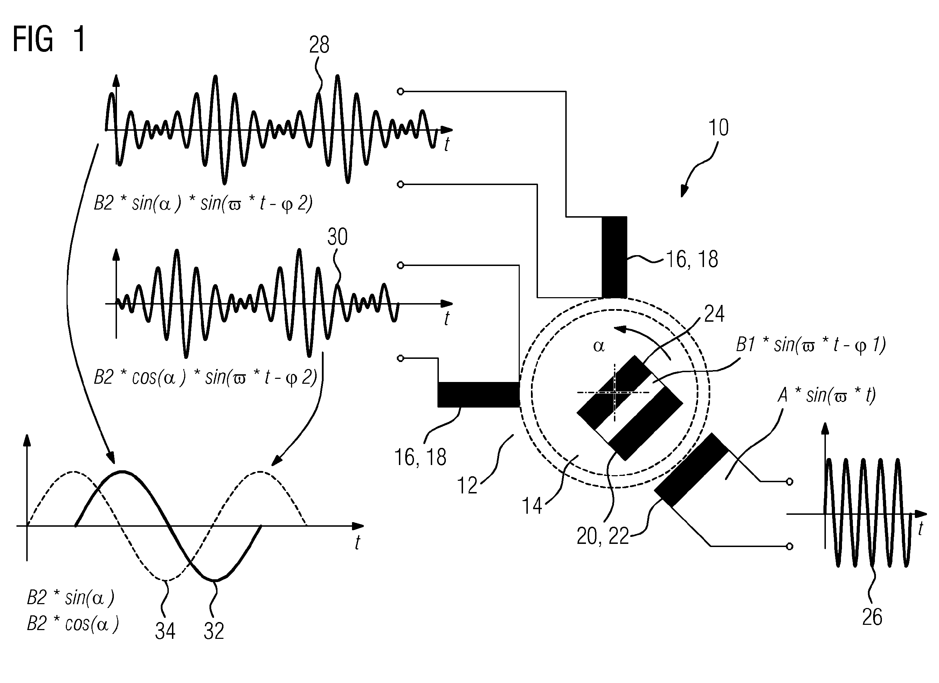

Die Darstellung in FIG 1 zeigt zunächst für einen nicht näher dargestellten Elektromotor einen an sich bekannten sogenannten Resolver 10. Für den Elektromotor und den zugeordneten Resolver 10 sind schematisch vereinfacht der Ständer 12 und der Rotor (Läufer) 14 gezeigt. Zum Resolver 10 gehören mindestens eine Ständerwicklung, in der darstellten Ausführungsform zwei Ständerwicklungen 16, 18 (erste Ständerwicklung 16; zweite Ständerwicklung 18), zwei Erregerwicklungen 20, 22 (erste Erregerwicklung 20; zweite Erregerwicklung 22) und eine Rotorwicklung (Läuferwicklung) 24. Die beiden Ständerwicklungen 16, 18 befinden sich im Ständer 12. Die Rotorwicklung 24 befindet sich im Rotor 14. Von den beiden Erregerwicklungen 20, 22 befindet sich die erste Erregerwicklung 20 im Ständer 12 und die zweite Erregerwicklung 22 im Rotor 14.

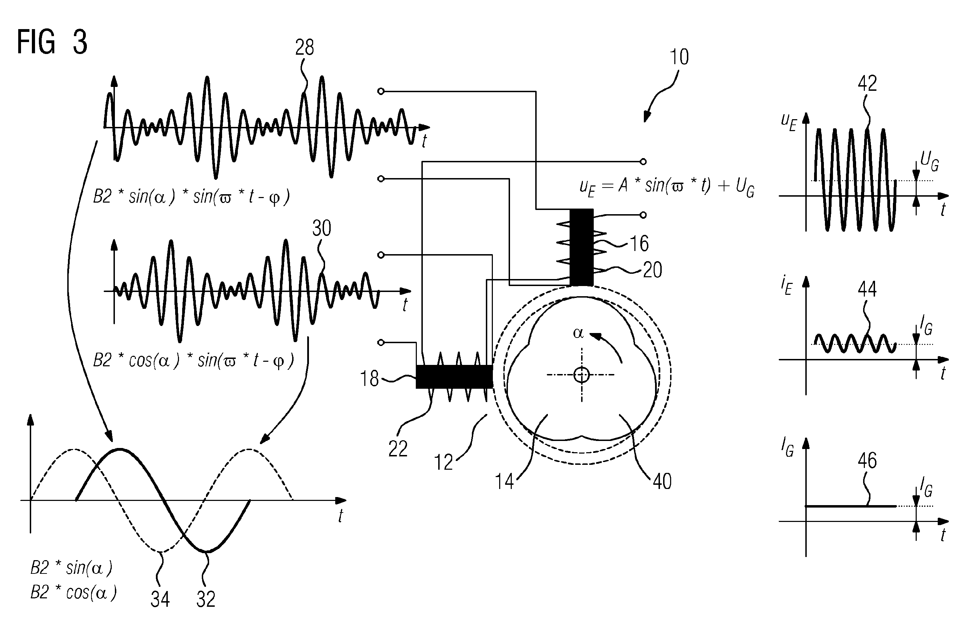

Soweit im Folgenden von Wicklungen, also zum Beispiel Ständer-, Erreger- und Rotorwicklungen gesprochen wird, bezieht sich dies stets auf die entsprechenden Wicklungen des Resolvers 10 oder - weiter unten - eines Reluktanzresolvers 10 (FIG 3) und nicht auf solche Wicklungen des jeweiligen Elektromotors, wie sie dort zur Erzeugung des Drehfelds bestimmt sind.

Mit einer in die ständerseitige Erregerwicklung 20 (erste Erregerwicklung 20) eingeprägten Erregerspannung 26 ($A*\sin(\overline{\omega}t)$) erfolgt eine Übertragung elektrischer Energie von der Ständerseite zur Rotorseite (Läuferseite). Die auf der Rotorseite resultierende Spannung kann symbolisch als

$$B1 * \sin(\varpi t - \varphi 1)$$

geschrieben werden. Aufgrund der so rotorseitig induzierten Spannung entstehen abhängig von einer jeweiligen Rotationslage des Rotors 14 in den Ständerwicklungen 16, 18 zwei amplitudenmodulierte sinus- und cosinusförmige Signale 28, 30. Das an der ersten Ständerwicklung 16 entstehende Signal 28 kann symbolisch als

$$B2 * \sin(\alpha) * \sin(\varpi t - \varphi 2)$$

und das an der zweiten Ständerwicklung 18 entstehende Signal 30 kann symbolisch als

$$B2 * \cos(\alpha) * \cos(\varpi t - \varphi 2)$$

geschrieben werden. Durch Demodulation ergeben sich aus diesen beiden Signalen 28, 30 die demodulierten Signale 32, 34, die symbolisch als

$$B2 * \sin(\alpha) \quad \text{und} \quad B2 * \cos(\alpha)$$

geschrieben werden können. Ein Rotorlagewinkel $\alpha$ ergibt sich dann in an sich bekannter Art und Weise als

$$\alpha = \arctan \frac{B2 * \sin(\alpha)}{B2 * \cos(\alpha)}$$

Die Drehzahl des Rotors 14 ergibt sich als die erste Ableitung des Rotorlagewinkels $\alpha$ nach der Zeit. Die Amplituden B2 kürzen sich heraus und können damit in gewissen Grenzen variabel gehalten werden.

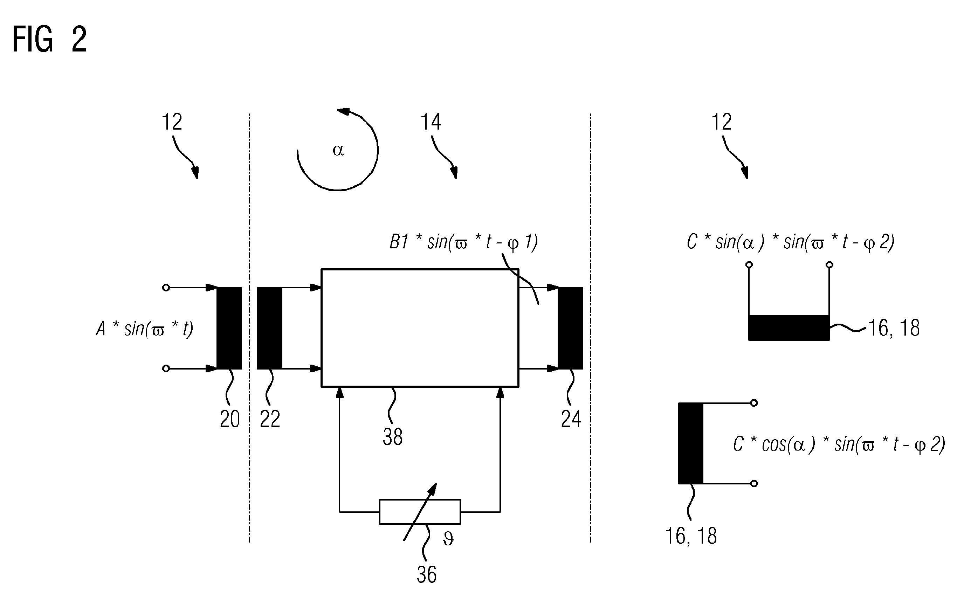

Wesentlich für den hier vorgestellten Ansatz ist aber die mittels des Resolvers 10 bewirkte Übertragung elektrischer Energie vom Ständer 12 zum Rotor 14. Mittels der zum Rotor 14 übertragenen elektrischen Energie können ein dem Rotor 14 zugeordneter Temperatursensor 36 (FIG 2) und eine ebenfalls dem Rotor 14 zugeordnete und zur Auswertung des Temperatursensors 36 vorgesehene Signalbeeinflussungseinheit 38 (FIG 2) betrieben werden.

Dazu zeigt die Darstellung in FIG 2 den Resolver 10 aus FIG 1 in einer im Hinblick auf den im Betrieb resultierenden Energiefluss linearen Anordnung. Links von der ersten vertikalen strichpunktierten Linie ist die im Ständer 12 befindliche erste Erregerwicklung 20 gezeigt. Zwischen den beiden vertikalen strichpunktierten Linien ist der Rotor 14 mit der zweiten Erregerwicklung 22 und der Rotorwicklung 24 gezeigt. Rechts von der zweiten vertikalen strichpunktierten Linie ist wiederum der Ständer 12 mit den beiden dortigen Ständerwicklungen 16, 18 gezeigt.

Im Rotor 14 ist die elektrisch leitende Verbindung zwischen der zweiten Erregerwicklung 22 und der Rotorwicklung 24 mittels der vom Rotor 14 umfassten Signalbeeinflussungseinheit 38 hergestellt. An die Signalbeeinflussungseinheit 38 ist der rotorseitige Temperatursensor 36 angeschlossen. Die Signalbeeinflussungseinheit 38 beeinflusst aufgrund eines vom Temperatursensor 36 aufgenommenen Messwerts für die Temperatur $\vartheta$ oder eines vom Temperatursensor 36 aufgenommenen Messwerts für ein Maß für die Temperatur $\vartheta$ - im Folgenden kurz als Temperatur $\vartheta$ bezeichnet - zum Beispiel die Amplitude der zur Rotorwicklung 24 gelangenden Erregerspannung: $B1 = f(\vartheta)$. Damit sind auch die Amplituden C der in die Ständerwicklungen 16, 18 induzierten Spannungen temperaturabhängig und mithin ein Maß für die Temperatur des Rotors 14. Aus der durch die Funktionalität der Signalbeeinflussungseinheit 38 begründeten Temperaturabhängigkeit der Amplitude B1 der Spannung über der Rotorwicklung 24 und der resultierenden Amplitude C der in die Ständerwicklungen 16, 18 induzierten Spannungen lässt sich damit die Temperatur des Rotors 14 (Rotortemperatur) ermitteln.

Die Signalbeeinflussungseinheit 38 kann mit passiven und/oder aktiven elektrischen/elektronischen Bauteilen ausgeführt sein. Im einfachsten Fall ergibt sich die temperaturabhängige Änderung der Amplitude B1 der Spannung über der Rotorwicklung 24 aufgrund eines Spannungsabfalls über dem Temperatursensor 36.

Alternativ oder zusätzlich kann mittels der Signalbeeinflussungseinheit 38 aufgrund der vom Temperatursensor 36 erfassten Temperatur $\vartheta$ auch eine Beeinflussung des Phasenwinkels $\varphi1$ der Spannung über der Rotorwicklung 24 erfolgen. Mit dem dann temperaturabhängigen Phasenwinkel $\varphi1$ ($\varphi1 = f(\vartheta)$) ist auch der Phasenwinkel $\varphi2$ der in die Ständerwicklungen 16, 18 induzierten Spannungen temperaturabhängig und mithin ein Maß für die Temperatur des Rotors 14. Aus der durch die Funktionalität der Signalbeeinflussungseinheit 38 begründeten Temperaturabhängigkeit des Phasenwinkels $\varphi1$ der Spannung über der Rotorwicklung 24 und dem resultierenden Phasenwinkel $\varphi2$ der in die Ständerwicklungen 16, 18 induzierten Spannungen lässt sich damit ebenfalls die Rotortemperatur ermitteln.

Das Grundprinzip des hier vorgestellten Ansatzes basiert darauf, dass zur Erfassung der Temperatur des Rotors 14 ein ohnehin vorhandener Resolver 10 verwendet wird, denn mit dem Resolver 10 wird die Rotationslage des Rotors 14 erfasst. Es werden also kaum zusätzliche Bauteile benötigt und vor allem werden keine zusätzlichen Mittel zur Energie- und/oder Datenübertragung vom Stator zum Rotor 14 und umgekehrt benötigt. Die Temperatur des Rotors 14 kann direkt aus den in die Ständerwicklungen 16, 18 induzierten Spannungen ermittelt werden, die zur Erfassung der Rotationslage des Rotors 14 ohnehin ausgewertet werden müssen. Damit ist auch keine zusätzliche Schaltung zum Abgriff der in die Ständerwicklungen 16, 18 induzierten Spannungen erforderlich.

Der hier vorgestellte Ansatz zeichnet sich damit im Ergebnis speziell dadurch aus, dass die Ermittlung der Temperatur des Rotors 14 mit einfachen Mitteln erfolgt und dass die so geschaffene Möglichkeit zur Erfassung der Temperatur des Rotors 14 die Systemkosten kaum erhöht.

Bei einer alternativen Ausführungsform des hier vorgestellten Ansatzes zur Erfassung der Temperatur des Rotors 14 wird anstelle eines "herkömmlichen" Resolvers (FIG 1) ein sogenannter Reluktanzresolver 10 verwendet. Die Darstellung in FIG 3 zeigt in gleicher Weise wie die Darstellung in FIG 1 einen selbst nicht näher dargestellten Elektromotor mit dessen Ständer 12 und dem drehbaren Rotor 14 (Läufer). Bei einem Reluktanzresolver 10 sind die Erregerwicklungen 20, 22 über den Ständerwicklungen 16, 18 aufgebracht. Der rotorseitige Teil des Reluktanzresolvers 10 besteht lediglich aus einer geblechten Stahlscheibe 40 mit einer entsprechend der jeweiligen Polzahl des Resolvers geformten Kontur. Die über den Ständerwicklungen 16, 18 abgreifbaren Ausgangssignale 28, 30 ergeben sich bei der Rotation der Motorwelle (nicht gezeigt) und entsprechender Rotation der geblechten Stahlscheibe 40 durch Feldverzerrung.

Zur Erfassung der Temperatur des Rotors 14 wird bei der in FIG 3 gezeigten Ausführungsform davon ausgegangen, dass die Temperatur der Motorwelle in etwa der Temperatur des Rotors 14 entspricht. Aufgrund von Wärmeleitung hat nach einer gewissen Zeit auch die an der Motorwelle angebrachte geblechte Stahlscheibe 40 dieselbe oder zumindest annähernd dieselbe Temperatur wie der Rotor 14. Durch Konvektion überträgt sich die von der geblechten Stahlscheibe 40 abgestrahlte Wärmeenergie über den Luftspalt auf die Ständerwicklungen 16, 18 des Reluktanzresolvers 10, so dass schließlich auch diese dieselbe oder zumindest annähernd dieselbe Temperatur wie der Rotor 14 aufweisen.

Der ohmsche Widerstand der Ständerwicklungen 16, 18 und der Erregerwicklungen 20, 22 ändert sich mit der jeweiligen Temperatur, so dass der ohmsche Widerstand dieser Wicklungen 16, 18; 20, 22 ein Maß für die Temperatur des Rotors 14 ist. Die Änderung des ohmschen Widerstands aufgrund der Temperatur hängt dabei bekanntlich von den Materialeigenschaften des jeweiligen Wicklungsdrahts ab. Bei zum Beispiel kupfernen Wicklungsdrähten ändert sich der ohmsche Widerstand um 0,4% pro Kelvin. Diese temperaturabhängige Widerstandsänderung beeinflusst die über den Ständerwicklungen 16, 18 abgreifbaren Ausgangssignale 28, 30 ($B*\sin(\alpha)*\sin(\overline{\omega}t-\varphi)$ bzw. $B*\cos(\alpha)*\cos(\overline{\omega}t-\varphi)$), nämlich deren Amplituden B. Die resultierenden Amplituden B sind damit ein Maß für die jeweilige Temperatur des Rotors 14.

Allerdings bilden sich die Amplituden im Wesentlichen aus der induktiven Blindkomponente (Imaginärteil) und nur in geringem Maße aus der ohmschen Komponente (Realteil). Daher ist es schwierig, aus der Amplitude den temperaturabhängigen Anteil (Realteil) genau genug zu bestimmen. Entsprechend wird vorgeschlagen, der Erregerspannung eine Gleichspannung $U_G$ zu überlagern. Die mit dem Gleichanteil $U_G$ überlagerte Erregerspannung 42 wird insgesamt mit dem Formelzeichen $u_E$ bezeichnet und ist in der Darstellung in FIG 3 auf der rechten Seite ganz oben dargestellt.

Der Gleichanteil $U_G$ in der Erregerspannung $u_E$ 42 führt zu einem Gleichanteil $i_G$ im resultierenden Erregerstrom 44, der insgesamt mit dem Formelzeichen $i_E$ bezeichnet ist und dessen Verlauf exemplarisch in der Darstellung in FIG 3 auf der rechten Seite in der Mitte dargestellt ist. Aufgrund des Gleichanteils $i_G$ im Erregerstrom $i_E$ 44 fließt in den Erregerwicklungen 20, 22 zusätzlich zum Wechselstrom ein dem Gleichanteil $I_G$ entsprechender Gleichstrom. Der jeweilige Gleichstromanteil $I_G$ kann leicht durch eine Glättung des Erregerstroms $i_E$ ermittelt werden. Der Gleichstromanteil $I_G$ ist mit dem Gleichanteil $U_G$ in der Erregerspannung $u_E$ über den ohmschen Widerstand der Erregerwicklung(en) 20, 22 verknüpft und damit mittelbar (siehe oben; Übertragung der Wärmeenergie vom Rotor 14 zum Ständer 12 durch Konvektion) ein Maß für die Temperatur der Rotors 14. Der geglättete Erregerstrom $i_E$, also der davon umfasste Gleichanteil $I_G$ 46, ist in der Darstellung in FIG 3 auf der rechten Seite ganz unten dargestellt.

Der Gleichanteil $i_G$ kann in an sich bekannter Art und Weise zum Beispiel über einen Shunt-Widerstand (nicht dargestellt) gemessen werden. Mit dem Gleichanteil $U_G$ in der Erregerspannung $u_E$ und dem gemessenen Gleichanteil $i_G$ im resultierenden Erregerstrom $i_E$ kann der temperaturabhängige Widerstand einer der Erregerwicklungen 20, 22 nach dem an sich bekannten Zusammenhang zwischen Strom, Spannung und Widerstand ermittelt werden:

$$R = \frac{u_G}{i_G}$$

Der Gleichanteil $U_G$, um den die Erregerspannung $u_E$ angehoben wurde (Offset), ist bekannt und konstant. Damit kann zusammen mit dem Messwert für den Gleichanteil $I_G$ im Erregerstrom $i_E$ unmittelbar der jeweilige Widerstandswert R bestimmt werden. Mit der Ermittlung des ohmschen Widerstandswerts R einer der Erregerwicklungen 20, 22 oder der Erregerwicklungen 20, 22 wird ein Maß für die Temperatur der Erregerwicklung (en) 20, 22 und damit auch ein Maß für die Temperatur des Rotors 14 ermittelt, wobei - wie oben geschildert - die Temperatur des Rotors 14 ursächlich für die Erwärmung der Erregerwicklung(en) 20, 22 ist.

Bei der Ermittlung der Temperatur des Rotors 14 aus dem ohmschen Widerstandswert R der Erregerwicklung (en) 20, 22 kann ein zeit- und/oder materialabhängiger Kompensationsfaktor berücksichtigt werden. Ein solcher Kompensationsfaktor trägt der Tatsache Rechnung, dass nach einer gewissen Betriebsdauer des Elektromotors die Temperatur der Erregerwicklung(en) 20, 22 relativ genau der Temperatur des Rotors 14 entspricht und dass zuvor die Temperatur der Erregerwicklung(en) 20, 22 noch unter der Temperatur des Rotors 14 liegt. Mit dem Start des Elektromotors kann also zum Beispiel ein Zähler oder ein sonstiger Zeitgeber gestartet werden, dessen jeweiliger Wert zur zeitabhängigen Korrektur der aus dem ohmschen Widerstandswert R der Erregerwicklung(en) 20, 22 ermittelten Temperatur des Rotors 14 verwendbar ist. Alternativ oder zusätzlich zu einer solchen zeitabhängigen Kompensation kann auch eine materialabhängige Kompensation vorgesehen sein, die mittels eines zusätzlichen Kompensationsfaktors berücksichtigt wird. Ein Kompensationsfaktor oder Kompensationswert kann sich auch aus einem in Software implementierten thermischen Modell des Elektromotors, zumindest des Rotors 14, ergeben. Bei einem solchen thermischen Modell wird zum Beispiel die aufgrund des eingespeisten Stroms resultierende Verlustleistung berücksichtigt. Ein solches thermisches Modell kann durch eine üblicherweise ohnehin erfasste Temperatur des Ständers 12 unterstützt werden.

Der Vorteil dieses Aspekts der Erfindung besteht darin, dass der ohnehin vorhandene Reluktanzresolver 10 zusätzlich als Temperatursensor fungiert. Ein separater Temperatursensor auf Seiten des Ständers 12 ist damit nicht erforderlich. Ebenfalls nicht erforderlich sind damit Zuleitungen und Anschlusspunkte eines solchen separaten Temperatursensors. Die Anschlusspunkte des Reluktanzresolvers 10 werden zum Abgriff der Signale zur Erfassung der Rotationslage des Rotors 14 und genauso zum Abgriff des Signals zur Erfassung der Temperatur des Rotors 14 verwendet.

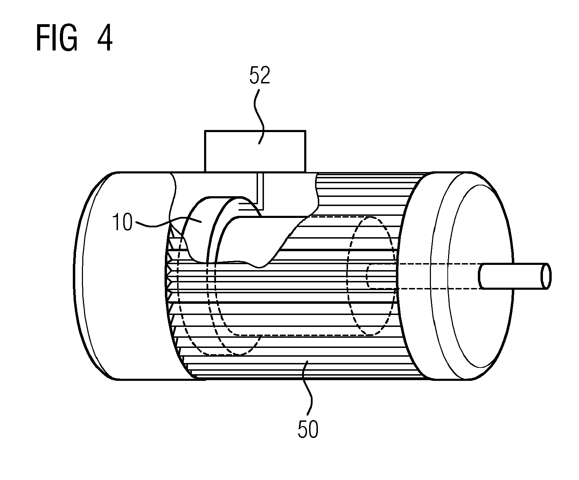

Beiden hier exemplarisch vorgestellten Ausführungsformen zur Erfassung einer Temperatur eines Rotors 14 eines Elektromotors 50 (FIG 4) ist also gemeinsam, dass ein dem Elektromotor 50 zugeordneter Resolver 10 als Mittel zur Erfassung der Temperatur des Rotors 14 fungiert. Dies ist in der Darstellung in FIG 4 nochmals in schematisch vereinfachter Form illustriert.

Die Darstellung in FIG 4 zeigt zunächst einen Elektromotor 50 und - nur schematisch vereinfacht - einen dem Elektromotor 50 zugeordneten Resolver 10 (FIG 1, FIG 2) oder Reluktanzresolver 10 (FIG 3). Die Ausgangssignale 32, 34 (FIG 1; FIG 3) des Resolvers 10 oder der Gleichanteil $U_G$ in der Erregerspannung $u_E$ 42 und der resultierende Gleichstromanteil $I_G$ 46 im Erregerstrom $i_E$ 44 werden mittels einer von einer Steuerungseinheit des Elektromotors 50 umfassten Auswertungseinheit 52 ausgewertet. Durch diese wird ein Maß für die Temperatur des Rotors 14 ermittelt und für eine Steuerung oder Regelung des Elektromotors 50 verfügbar gemacht. Die Funktionalität der Auswertungseinheit 52 ist üblicherweise in Software oder in Soft- und Firmware realisiert. Eine rein hardwaremäßige Realisierung ist grundsätzlich ebenfalls denkbar. Die Auswertungseinheit 52 kann sich - anders als dargestellt - auch entfernt vom Elektromotor 50 befinden. Dann ist die Auswertungseinheit 52 einem Wechselrichter mit Antriebsregelung (nicht gezeigt) zugeordnet. Ein solcher Wechselrichter ist üblicherweise in einem Schaltschrank (ebenfalls nicht gezeigt) angeordnet und der Elektromotor 50 ist mit einer Leistungsleitung und einer Geberleitung für die Resolversignale mit dem Wechselrichter verbunden. Gerade bei dieser Topologie erkennt man der Vorteil der hier vorgestellten Lösung, da hier die bisher eingesetzten Stecker und Leitungen nicht geändert werden müssen. Zum Erhalt eines Maßes für die Temperatur des Rotors 14 reicht also der Anschluss der Auswertungseinheit 52 an die Anschlüsse des jeweiligen Resolvers 10 aus. Weitere Anschlüsse innerhalb des Elektromotors 50 werden nicht benötigt.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Der Ansatz kommt für Elektromotoren 50 aller Art, speziell aber für die eingangs erwähnten permanenterregten Synchron- und Asynchronmaschinen in Betracht.

Einzelne im Vordergrund stehende Aspekte der hier eingereichten Beschreibung lassen sich damit kurz wie folgt zusammenfassen: Angegeben werden eine Vorrichtung und ein Verfahren zur Erfassung einer Temperatur eines Rotors 14 eines Elektromotors 50, wobei ein dem Elektromotor 50 zugeordneter Resolver 10 als Mittel zur Erfassung der Temperatur des Rotors 14 fungiert sowie eine Verwendung eines zur Erfassung einer Rotationslage eines Rotors 14 eines Elektromotors 50 vorgesehenen Resolvers 10 als Mittel zur Ermittlung einer Temperatur eines Rotors 14 des Elektromotors 50.

**Patentansprüche**

1. Vorrichtung zur Erfassung einer Temperatur eines Rotors (14) eines Elektromotors (50), **dadurch gekennzeichnet, dass** ein dem Elektromotor (50) zugeordneter Resolver (10) als Mittel zur Erfassung der Temperatur des Rotors (14) fungiert.

2. Vorrichtung nach Anspruch 1, wobei der Resolver (10) eine erste ortsfeste Erregerwicklung (20), eine zweite, mit dem Rotor (14) bewegliche Erregerwicklung (22), eine ebenfalls mit dem Rotor (14) bewegliche Rotorwicklung (24) und zumindest eine ortsfeste Ständerwicklung (16, 18) umfasst, wobei die zweite Erregerwicklung (22) und die Rotorwicklung (24) im Rotor (14) über eine Signalbeeinflussungseinheit (38) gekoppelt sind, wobei mittels der Signalbeeinflussungseinheit (38) eine temperaturabhängige Weiterleitung einer in die zweite Erregerwicklung (22) induzierten Spannung zur Rotorwicklung (24) bewirkbar ist und wobei eine in die oder jede Ständerwicklung (16, 18) aufgrund der temperaturabhängig beeinflussten Spannung der Rotorwicklung (24) induzierte Spannung als Maß für eine Temperatur des Rotors (14) auswertbar ist.

3. Vorrichtung nach Anspruch 2, wobei an die Signalbeeinflussungseinheit (38) ein im Rotor (14) befindlicher Temperatursensor (36) angeschlossen ist und wobei aufgrund eines mittels des Temperatursensors (36) aufgenommenen Maßes für die Temperatur des Rotors (14) mittels der Signalbeeinflussungseinheit (38) eine charakteristische Größe einer zur Rotorwicklung (24) gelangenden Erregerspannung (26) beeinflussbar ist.

4. Vorrichtung nach Anspruch 3, wobei als charakteristische Größe eine Amplitude der zur Rotorwicklung (24) gelangenden Erregerspannung (26) beeinflussbar ist.

5. Vorrichtung nach Anspruch 3, wobei als charakteristische Größe ein Phasenwinkel der zur Rotorwicklung (24) gelangenden Erregerspannung (26) beeinflussbar ist.

6. Verfahren zum Betrieb einer Vorrichtung gemäß einem der Ansprüche 2 bis 5 zur Erfassung einer Temperatur des Rotors (14) eines Elektromotors (50), wobei mittels der Signalbeeinflussungseinheit (38) eine temperaturabhängige Weiterleitung einer in die zweite Erregerwicklung (22) induzierten Spannung zur Rotorwicklung (24) erfolgt und wobei eine in die oder jede Ständerwicklung (16, 18) aufgrund der temperaturabhängig beeinflussten Spannung der Rotorwicklung (24) induzierte Spannung als Maß für eine Temperatur des Rotors (14) ausgewertet wird.

7. Vorrichtung nach Anspruch 1, wobei der Resolver (10) als Reluktanzresolver ausgeführt ist, der im Ständer (12) zumindest eine Ständerwicklung (16, 18) und eine über der oder jeder Ständerwicklung (16, 18) aufgebrachte Erregerwicklung (20, 22) sowie im Rotor (14) eine geblechte Stahlscheibe (40) umfasst, wobei in die oder jede Erregerwicklung (20, 22) eine um einen Gleichanteil erhöhte Erregerspannung (42) einspeisbar ist, wobei ein aufgrund des Gleichanteils in der Erregerspannung resultierender Gleichanteil eines Erregerstroms (44) messbar und wobei aus dem Gleichanteil der Erregerspannung und dem Gleichanteil des Erregerstroms (44) als Maß für eine Temperatur des Rotors (14) ein ohmscher Widerstand der oder jeder Erregerwicklung (20, 22) ermittelbar ist.

8. Verfahren zum Betrieb einer Vorrichtung gemäß Anspruch 7 zur Erfassung einer Temperatur des Rotors (14) eines Elektromotors (50),
wobei in die oder jede Erregerwicklung (20, 22) eine um einen Gleichanteil erhöhte Erregerspannung (42) eingespeist wird,
wobei ein aufgrund des Gleichanteils in der Erregerspannung resultierender Gleichanteil eines Erregerstroms (46) gemessen wird und
wobei aus dem Gleichanteil der Erregerspannung und dem Gleichanteil des Erregerstroms (46) als Maß für eine Temperatur des Rotors (14) ein ohmscher Widerstand der oder jeder Erregerwicklung (20, 22) ermittelt wird.

9. Verwendung eines zur Erfassung einer Rotationslage eines Rotors (14) eines Elektromotors (50) vorgesehenen Resolvers (10) als Mittel zur Ermittlung einer Temperatur eines Rotors (14) des Elektromotors (50).

FIG 1

$B2 * sin(\alpha) * sin(\varpi * t - \varphi 2)$

$B2 * cos(\alpha) * sin(\varpi * t - \varphi 2)$

$B2 * sin(\alpha)$
$B2 * cos(\alpha)$

$B1 * sin(\varpi * t - \varphi 1)$

$A * sin(\varpi * t)$

EP 2 853 873 A1

FIG 2

$A * sin(\varpi * t)$

$B1 * sin(\varpi * t - \varphi 1)$

$C * sin(\alpha) * sin(\varpi * t - \varphi 2)$

$C * cos(\alpha) * sin(\varpi * t - \varphi 2)$

12

14

12

20   22

38

24

16, 18

16, 18

36

$\alpha$

$\vartheta$

EP 2 853 873 A1

FIG 3

$B2 * sin(\alpha) * sin(\varpi * t - \varphi)$

$B2 * cos(\alpha) * sin(\varpi * t - \varphi)$

$B2 * sin(\alpha)$
$B2 * cos(\alpha)$

$u_E = A * sin(\varpi * t) + U_G$

$u_E$

$U_G$

$i_E$

$I_G$

$I_G$

$I_G$

EP 2 853 873 A1

FIG 4

Europäisches
Patentamt

European
Patent Office

Office européen
des brevets

## EUROPÄISCHER RECHERCHENBERICHT

Nummer der Anmeldung

EP 13 18 6601

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2006 214969 A (MITSUBISHI ELECTRIC CORP) 17. August 2006 (2006-08-17) * das ganze Dokument * ----- | 1,9 | INV. G01K13/08 G01K7/16 G01D5/20 |
| X | DE 10 2007 033881 A1 (SIEMENS AG) 22. Januar 2009 (2009-01-22) * Zusammenfassung; Ansprüche 1,2; Abbildungen 2,14 * * Absätze [0004], [0005], [0007], [0020], [0062] * ----- | 1-6,9 | |

RECHERCHIERTE
SACHGEBIETE (IPC)

G01K
G01D

Der vorliegende Recherchenbericht wurde für alle Patentansprüche erstellt

| Recherchenort | Abschlußdatum der Recherche | Prüfer |
|---|---|---|
| München | 10. Februar 2014 | Barthélemy, Matthieu |

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-6, 9

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 13 18 6601

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-6, 9

    Resolver zur Erfassung der Temperatur des Rotors eines Elektromotors, wobei im Rotor des Resolvers eine Signalbeeinflussungseinheit zur Weiterleitung einer temperaturabhängigen Spannung vorhanden ist
    ---

2. Ansprüche: 7, 8

    Resolver zur Erfassung der Temperatur des Rotors eines Elektromotors, wobei der Rotor des Resolvers eine geblechte Stahlscheibe ist, und wobei der Widerstand einer Erregerwicklung als Maß für Temperatur gemessen wird
    ---

**ANHANG ZUM EUROPÄISCHEN RECHERCHENBERICHT**
**ÜBER DIE EUROPÄISCHE PATENTANMELDUNG NR.**                    EP 13 18 6601

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-02-2014

| Im Recherchenbericht angeführtes Patentdokument | Datum der Veröffentlichung | Mitglied(er) der Patentfamilie | Datum der Veröffentlichung |
|---|---|---|---|
| JP 2006214969 A | 17-08-2006 | JP 4158174 B2<br>JP 2006214969 A | 01-10-2008<br>17-08-2006 |
| DE 102007033881 A1 | 22-01-2009 | DE 102007033881 A1<br>WO 2009013153 A1 | 22-01-2009<br>29-01-2009 |

EPO FORM P0461

Für nähere Einzelheiten zu diesem Anhang : siehe Amtsblatt des Europäischen Patentamts, Nr.12/82